Europäisches Patentamt

European Patent Office

Office européen des brevets

(11) Numéro de publication: **0 211 712**
**A1**

(12) ## DEMANDE DE BREVET EUROPEEN

(21) Numéro de dépôt: **86401433.7**

(22) Date de dépôt: **27.06.86**

(51) Int. Cl.⁴: **C 04 B 41/48**

(30) Priorité: **27.06.85 FR 8510036**

(43) Date de publication de la demande:
**25.02.87 Bulletin 87/9**

(84) Etats contractants désignés:
**AT BE CH DE FR GB IT LI LU NL SE**

(71) Demandeur: **Pecha, Jean-Claude**
**3, rue d'Aviau**
**F-33000 Bordeaux(FR)**

(72) Inventeur: **Pecha, Jean-Claude**
**3, rue d'Aviau**
**F-33000 Bordeaux(FR)**

(74) Mandataire: **Brot, Philippe et al,**
**CABINET BROT et JOLLY 83, rue d'Amsterdam**
**F-75008 Paris(FR)**

(54) **Nouveau liant organique polymérisable pour le traitement dans la masse des matériaux poreux d'un bâtiment.**

(57) L'invention concerne un nouveau liant organique pour le traitement dans la masse des matériaux poreux d'un bâtiment.

On utilise une solution d'un polymère liquide de polybutadiène qui se polymérise rapidement par oxydation.

Le procédé permet de traiter, par exemple, les enduits de plâtre extérieurs qui sont érodées et solubilisés par l'eau de pluie.

EP 0 211 712 A1

Croydon Printing Company Ltd.

Nouveau liant organique polymérisable pour le traitement dans la masse des matériaux poreux d'un bâtiment.

L'invention concerne la formulation d'un liant organique polymérisable pour le traitement dans la masse des matériaux poreux d'un bâtiment. Elle a plus particulièrement pour objet un liant apte à pénétrer totalement les matériaux poreux d'un bâtiment, par exemple les enduits de chaux ou de plâtre et les pierres tendres, afin de les rendre moins friables en leur donnant une meilleure résistance à la compression et plus de cohésion, les particules enrobées étant moins sensibles à l'action dégradante ou solubilisante de l'eau. Elle s'applique, en particulier, au traitement des enduits extérieurs d'imperméabilisation de façade à base de plâtre (voir le brevet français n° 2 363 532), destinés à remplir les mêmes fonctions qu'un enduit traditionnel au mortier hydraulique.

En effet, on a constaté à l'usage que le comportement de ces enduits n'est pas satisfaisant, car l'eau désagrège le plâtre et l'enduit s'érode énormément (50 % en deux ou trois ans), puis se fissure et peut se décoller. L'hydrofugation de cet enduit par un polyhydro-génométhyl siloxane, fluide silicone n'a pas d'effet durable. L'agence pour la Prévention des Désordres et l'Amélioration de la Qualité de la Construction, a d'ailleurs édité divers textes, en 1984, mettant en garde les utilisateurs contre les conséquences néfastes des produits de ce type. L'agence estime en effet les surfaces sinistrées à 5 à 10 millions de $m^2$ et prévoit un coût de réparation de 150 à 400 Francs par $m^2$ soit 0,7 à 4 milliards de francs. Dans l'un de ces textes on peut lire : "L'enduit est caractérisé par sa sensibilité à l'eau, d'une part, et sa solubilité dans l'eau liquide et son instabilité dimensionnelle et structurelle lorsqu'il est humidifié, d'autre part".

Actuellement, un faible pourcentage des dégâts causés a été réparé, soit par élimination totale de l'enduit de plâtre et réfection par enduit de ciment, pour un coût d'environ 400 francs français au mètre carré, soit par revêtements d'étanchéité, c'est-à-dire de système adhérents minces posés en 1 à 2 kg par $m^2$, au prix de 100 à 200 F le $m^2$.

Ces revêtements d'étanchéité antifissures sont utilisés avec succès sur les enduits de ciment, après avoir fixé éventuellement la surface qui peut être dégradée et friable. Par contre, ces enduits de plâtre sont dégradés dans toute leur épaisseur -2 cm- et l'imprégnation superficielle sur 1 à 3 mm n'aura qu' une durée limitée ; des décollements apparaissent après 2 ou 3 ans seulement, sur les chantiers traités avec les "systèmes adhérents minces". En effet, la perméabilité à la vapeur d'eau de ces revêtements est faible, ce qui peut amener des condensations dans l'épaisseur de l'enduit, qui continue ainsi à vieillir et à se désagréger. L'ensemble plâtre et revêtement ne pourra donc pas être entretenu ni conservé après les 10 années de garantie légale (voir à ce sujet l'avis de M. Logeais, Directeur du Bureau Sécuritas : question 26, page 66 dans le compte-rendu de la journée technique CATED-SNJF du 25 mars 1982).

L'invention vise à remédier à ces inconvénients en proposant un liant insensible à l'eau, apte à pénétrer toute l'épaisseur de l'enduit de plâtre dégradé, en recollant efficacement toutes les particules et en évitant toute dissolution nouvelle du plâtre due aux pénétrations latérales et périphériques de l'eau dans l'enduit ou aux condensations dans la masse. Le traitement de toute la masse d'un enduit de plâtre est rendu nécessaire, même si la protection contre la pluie est assurée par une peinture, du fait que l'enduit sera toujours exposé à l'humidité.

L'enduit retrouve ainsi ses caractéristiques mécaniques d'origine, et une bonne résistance à l'eau et à l'humidité. Il est alors possible de le revêtir simplement d'une peinture microporeuse de façade DTU 59-1 et 59-2 (MF-T 30-804). C'est seulement dans le cas de fissures du gros oeuvre que les revêtements d'étanchéité NF-P84-402-et les mastics
pour fissures devront être utilisés ; ils pourront l'être
sans craindre le décollement ni le cloquage dû à la
friabilité de l'enduit en profondeur.

A cet effet, l'invention a pour objet un liant organique polymérisable apte à pénétrer la totalité de l'épaisseur
des matériaux poreux d'un bâtiment, afin d'augmenter par
collage des particules leur résistance à la compression
et leur cohésion et de diminuer leur sensibilité à l'eau,
caractérisé en ce qu'il comprend en solution dans des
hydrocarbures benzéniques ou aliphatiques, un polybutadiène
liquide, éventuellement modifié par des adjuvants conventionnels.

Dans une forme de mise en oeuvre préférée de l'invention,
le polybutadiène liquide présente les caractéristiques
suivantes :

- composition isomérique: 72 % de doubles liaisons en
1,4cis, 27 % de doubles liaisons en 1,4trans, 1 % de
radical vinyl;

- densité : $0,91g/cm^3$;

- viscosité : environ 750 Pa.S;

- masse moléculaire : environ 1 800 g/mol ($\pm$ 15 %),
ce polybutadiène étant en outre insaporifiable.

Un tel polybutadiène est par exemple commercialisé
sous les appellations POLYOL 110 ou UNIVEST par la Société
CHEMISCHE WERKEHULS AG.

L'UNIVEST est décrit sous la forme suivante dans
la Notice 1119, de Janvier 1985, s'y rapportant :

"Liant universel pour presque tous matériaux sableux
sans ciment et sans eau, UNIVEST est un polymère liquide
spécial, qui s'applique tout particulièrement à la stabilisation des sables à granulométrie uniforme. Lors du
durcissement, les grains adhèrent les uns aux autres à des
points de contact minces". On y propose, comme formule
d'emploi, le mélange de 100 parties de sable et de 2 parties

- 4 -                    0211712

d'UNIVEST, le mortier obtenu, à séchage très rapide par oxydation, étant utilisé pour confectionner des routes, des chapes, des briques, des bétons moulés, etc... Cette notice ne propose donc pas l'emploi de l'UNIVEST pour d'autres usages comme la confection d'un liquide d'imprégnation pour consolider des matériaux poreux et friable. La possibilité de mise en solution dans un solvant n'est pas évoquée et l'UNIVEST, tel quel, ne peut pénétrer les matériaux poreux.

Le but de l'invention est de proposer la confection de liquides d'imprégnation totale à base de ces polymères, qui, après polymérisation par oxydation, donnent ou redonnent à un matériau poreux et friable, une résistance mécanique et une insensibilité à l'eau convenable pour un usage défini.

Les matériaux proposés sont par exemple, les plâtres morts intérieurs, les plâtres extérieurs du type lutèce-Projext ou du type classique, les enduits de ciment ou de chaux grasse, les ragréages poudreux, les enduits ou les briques de terre non cuite, le béton cellulaire, les revêtements plastiques épais, les peintures poreuses et dégradées, etc...

On donne ci-après, à titre d'exemples non limitatifs, trois formules de liants conformes à l'invention :

- <u>Composition A</u> : Base

UNIVEST ou POLYOL 110 : 15 parties (10 à 20) + hydrocarbures benzéniques (xylène, toluène) ou aliphatiques (essence F, white spirit) : 85 parties (80 à 90) + catalyseurs de polymérisation Q.S.P. 100 parties.

- <u>Composition B</u> : <u>imprégnation universelle</u>

UNIVEST ou POLYOL 110 : 15 Parties + Essence F : 85 parties + Fongicide algicide = Q.S. + Agent mouillant du support Q.S. + Agent d'étalement = Q.S. + Agent anti-bulles d'air Q.S. ou 100 parties.

- <u>Composition C</u> : imprégnation totale plus imperméabilisation ou hydrofugation de la partie superficielle du matériau sur deux millimètres par exemple. On ajoute à la composition B des résines faiblement pénétrantes, soit une résine acrylique hautement polymérisée, soit une résine de polyuréthane à durcissement par l'humidité de l'air, soit également des résines de caoutchouc chloré ou isomérisé, etc.. Pour hydrofuger uniquement, on pourra ajouter à la composition B un hydrofuge silicone ou paraffine. Les traitements faits avec la composition C n'ont pas à être recouverts de peintures ou autres revêtements ; ils sont utilisables pour la pierre, les briques et pour faire un traitement préventif très économique des plâtres extérieurs. On pourra pigmenter le produit en blanc, par exemple avec 1 ou 2 % de dioxyde de titane, ou en couleur avec des oxydes de fer.

La consommation utile de composition A ou B, pour un enduit de plâtre extérieur ou de chaux, est de 1 litre par $m^2$ pour 1 cm d'épaisseur d'enduit et, pour la pierre tendre, 0,7 litre par $m^2$ pour 1 cm d'épaisseur.

Les compositions A et B sont également appropriées pour répondre aux "Fonctions durcissantes pénétrantes" et "Fonctions de consolidation" définies dans la Norme Peinture T30-805.

La concentration utile (Extrait Sec) est comprise entre 8 et 20 %.

L'application peut se faire au rouleau, mais l'emploi d'un pulvérisation est plus économique.

REVENDICATIONS

1.- Liant organique polymérisable apte à pénétrer la totalité de l'épaisseur des matériaux poreux d'un bâtiment, afin d'augmenter par collage des particules leur résistance à la compression et leur cohésion et de diminuer leur sensibilité à l'eau, caractérisé en ce qu'il comprend en solution dans des hydrocarbures benzéniques ou aliphatiques, un polybutadiène liquide, éventuellement modifié par des adjuvants conventionnels.

2.- Liant organique selon la revendication 1, caractérisé en ce que le polybutadiène liquide présente les caractéristiques suivantes :

- composition isomérique : 72 % de doubles liaisons en 1,4 cis, 27 % de doubles liaisons en 1,4 trans , 1 % de radical vinyl,
- densité : 0,91 g/cm$^3$,
- viscosité : environ 750 Pa.S,
- masse moléculaire : environ 1 800 g/mol ($\pm$ 15 %),

ce polybutadiène étant en outre insaporifiable.

3.- Liant d'imprégnation selon les revendications 1 et 2, caractérisé en ce qu'il présente un extrait sec de 10 à 20%.

4.- Utilisation d'un liant organique, selon l'une des revendications 1 à 3, pour le traitement dans la masse des matériaux poreux d'un bâtiment.

**0211712**

Office européen
des brevets

**RAPPORT DE RECHERCHE EUROPEENNE**

Numéro de la demande

EP 86 40 1433

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| A | FR-A-2 131 032 (GYL-LABOR DR. KARL NEY KG)<br>* Revendications 1,2 * | 1,4 | C 04 B 41/48 |
| A | FR-A-2 299 291 (INDUSTRIE AUTOMATION)<br>* Revendications 1,2 * | 1,4 | |
| A | BE-A- 655 765 (RIGIPS) | | |
| A | CHEMICAL ABSTRACTS, vol. 80, no. 8, 25 février 1974, page 87, résumé no. 38583g, Columbus, Ohio, US; & JP-A-72 38 866 (NIPPON SODA CO. LTD.) 30-09-1972 | | |

DOMAINES TECHNIQUES
RECHERCHES (Int. Cl.4)

C 04 B 41/00
C 04 B 26/00

Le présent rapport de recherche a été établi pour toutes les revendications

| Lieu de la recherche | Date d'achèvement de la recherche | Examinateur |
|---|---|---|
| LA HAYE | 14-11-1986 | DAELEMAN P.C.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant